# EUROPÄISCHE PATENTSCHRIFT

(11) **EP 1 595 893 B1**
(45) Veröffentlichungstag und Bekanntmachung des Hinweises auf die Patenterteilung: **01.07.2009**
(21) Anmeldenummer: 05010315.9
(22) Anmeldetag: 12.05.2005
(51) Int. Cl.: C08F 2/44, C08K 3/34

(54) **Verfahren zur Herstellung von polymeren Verbundmaterialien**
Process for producing polymeric composite materials
Procédé de fabrication des matériaux polymères composites

(30) Priorität: 12.05.2004 DE 102004023900
(43) Veröffentlichungstag der Anmeldung: 16.11.2005
(73) Patentinhaber: WOCO Industrietechnik GmbH, 63628 Bad Soden-Salmünster (DE)
(72) Erfinder: Menges, Georg Prof. Dr., 52072 Aachen (DE); Wolf, Bernhard, 63628 Bad Soden-Salmünster (DE)
(74) Vertreter: Metten, Karl-Heinz

(56) Entgegenhaltungen:
- DE-A1- 19 905 503
- US-A- 4 889 885
- US-A- 5 229 451
- US-A- 5 248 720
- US-A1- 2002 165 306

## Beschreibung

Die vorliegende Erfindung betrifft ein Verfahren zur Herstellung von polymeren Verbundmaterialien.

Kunststoffe, insbesondere preisgünstige Massenkunststoffe, aber auch viele technische Kunststoffe sind noch stets mit Nachteilen behaftet, die einer Verbreiterung der Anwendungspalette, insbesondere der Substitution metallischer Bauteile im Wege stehen. So verfügen Kunststoffe in der Regel bei Raumtemperatur nur über einen niedrigen Elastizitätsmodul, d.h. über niedrige Steifigkeit und Festigkeit. Damit einher geht eine nur mäßige Kratzfestigkeit, die für viele Anwendungen als störend empfunden wird. Zudem nehmen obige Eigenschaften mit steigender Temperatur nochmals stark ab. Von erheblichem Nachteil ist ferner, dass die Schlagzähigkeit von Kunststoffen rapide abnimmt, wenn verstärkende Füllstoffe eingearbeitet werden. Der Einsatz von Füllstoffen gestattet regelmäßig auch nicht die Herstellung transparenter oder transluzenter Kunststoffbauteile. Ferner verändert sich die Empfindlichkeit von Kunststoffen im allgemeinen mit der Zeit. Schließlich sind Kunststoffe leicht brennbar und weisen eine starke Permeation von Gasen und Dämpfen auf.

Um wenigstens einige dieser Probleme ohne nennenswerte Einbußen in den Griff zu bekommen, werden gleichwohl Füllstoffe in Kunststoffe eingearbeitet. Der Einbau von z.B. bruchfesten Fasern stellt eine sehr gute Möglichkeit dar, aus Kunststoffen attraktive Leichtbauwerkstoffe mit einem höheren Elastizitätsmodul zu machen. Allerdings sind die Fertigungsverfahren zur Verarbeitung von Kunststoffen mit langen Glasfasern in den meisten Anwendungen zu teuer. Massenartikel aus Kunststoffen sind in der Regel nur dank der Vorteile, welche das Spritzgießverfahren bietet, konkurrenzfähig. Hier kann bislang allerdings nur mit kurzen Glasfasern verstärkt werden. Demgemäß lassen sich der Elastizitätsmodul und die Festigkeit allenfalls geringfügig unter Inkaufnahme erniedrigter Schlagzähigkeiten und einer anspruchsvollen Verarbeitung verbessern. Im allgemeinen kann für die erfolgreiche Wirkung eines verstärkend wirkenden Füllstoffes verlangt werden, daß sein E-Modul mindestens 10-fach über demjenigen der Polymermatrix liegt und daß er ein möglichst großes Aspektverhältnis aufweist. Die Brennbarkeit von Kunststoffen kann in vielen Fällen nur durch hohe Füllstoffgaben von brandhemmenden Stoffen in Grenzen gehalten werden.

Gemäß US 4,739,007 ist es möglich, Partikel des schichtartig aufgebauten Montmorillonits durch eine chemische Vorbehandlung mit einer anorganischen oder organischen, kationischen Verbindung zu einer Spreizung der Schichten anzuregen. Die anschließende kationische, hydrolytische oder anionische Polymerisation eines Polyamids in Gegenwart des behandelten Montmorillonits führt zu einer Dispergierung desselben in einzelne Plättchen mit einer Dicke von etwa 1 nm und einer Fläche von bis zu etwa 500 x 500 nm². Dies entspricht Aspektverhältnissen von 500:1, was im allgemeinen als zufriedenstellend zu bezeichnen ist, da es sich dank der Plättschenstruktur um ein laterales Aspektverhältnis handelt. Bislang konnten allerdings nur bei im Laboratoriumsmaßstab hergestellten Kunststoffformteilen nachweislich bessere mechanische Eigenschaften in Bezug auf den Elastizitätsmodul und die Schlagzähigkeit nachgewiesen werden. Leider ist es bislang nicht gelungen, diesen Effekt auf im großtechnischen Maßstab hergestellte Kunststoffprodukte zu übertragen. So wird in der Regel in der industriellen Praxis allenfalls der Modul verbessert, nicht jedoch auch die Schlagzähigkeit. Nanocomposite mit optimierten mechanischen Eigenschaften lassen sich gemäß der US 4,739,007 bisher nur aus Polyamid 6 (ε-Caprolactam) oder Polyamid 12 (ω-Dodecanolactam) im Wege einer hydrolytischen kationischen in-situ Polymerisation erhalten, wenn etwa 2 bis 5 Gew.-% an aufbereitetem Montmorillonit mit einem Durchmesser im Bereich von etwa 1 bis 5 µm zusammen mit Wasser in dem Lactam gelöst und diese Mischung dann unter einer Stickstoffatmosphäre mit einer wässrigen 5%-igen Aminocapronsäure-Lösung als Aktivator in einem Reaktor über ca. 20 Stunden bei 260°C unter intensivem Rühren polykondensiert wird. Da sich diese in-situ Polymerisation nicht in den großtechnischen Maßstab transferieren lässt und zudem bereits im Labormaßstab langwierig und teuer ist, ist alternativ versucht worden, vorbehandelte Schichtsilikate in Polymerschmelzen einzumischen und in der Schmelze zu exfolieren. Beispielsweise hat S. Schönfeld in seinem am 07. Mai 2003 im Institut für Kunststoffverarbeitung (IKV) in Aachen im Rahmen des Seminars "Innovative Compoundierverfahren - Herausforderung, Perspektiven, Lösungen" gehaltenen Vortrag "Herstellung von Nanocomposites auf Compoundierextrudern" offenbart, dass sich vorbehandelte Schichtsilikate enthaltende Thermoplastschmelzen in gleichläufigen, dicht kämmenden Doppelschnecken, die mit einem Co-Kneter ausgestattet sind, verarbeiten lassen. Dieser Ansatz ist sehr aufwendig und lässt noch stets Wünsche offen im Hinblick auf die Erzielung eines guten Elastizitätsmoduls sowie gleichzeitig guter Schlagzähigkeiten. Zwar werden mit Hilfe einer verstärkten Scherung Schichtsilikate in der Regel besser in Thermoplastschmelzen eingearbeitet, allerdings führen starke Scherfelder zu einem Abbau der Molekulargewichte der Polymere, was wiederum zu Einbußen bei den mechanischen Eigenschaften führt.

Die aus dem Stand der Technik bekannten Herstellverfahren für füllstoffhaltige Kunststoffe bieten bislang die folgenden Lösungsansätze.

In der DE 3 632 865 A wird ein Verfahren zur Herstellung von Polymerverbundmaterialien beschrieben, bei dem Polyamid bildende Monomere in Gegenwart bestimmter delaminierter Schichtsilikate polymerisiert werden und wobei Wasser als Polymerisationskatalysator verwendet wird. Auch aus der WO 93/04117 geht hervor, Blends dadurch herzustellen, dass man vorbehandelte Silikate einem Monomeren zufügt und dieses polymerisiert. Weitergehende Angaben sind diesen Dokumenten jedoch nicht zu entnehmen.

Die DE 19 819 299 A1 offenbart ein Verfahren zur Herstellung von Polymerlegierungen, enthaltend mindestens ein thermoplastisches Polymer, mindestens ein Polyamid und mindestens ein delaminiertes Schichtsilikat. Hierbei wird das thermoplastische Polymer in mindestens einem Lactam, in dem die Schichtsilikate suspendiert worden sind, gelöst, woraufhin die Lactammonomeren in Gegenwart von bis zu acht Gewichtsprozent an Wasser polymerisiert werden. Auf diese Weise sollen fein dispergierte Zusammensetzungen auf der Basis unterschiedlicher thermoplastischer Kunststoffe und Polyamide, die delaminierte Schichtsilikate enthalten, zugänglich sein, ohne dass bei der Polymerisation die thermoplastischen Polymere abgebaut werden. Aus diesen Mischungen erhaltene Formkörper zeichnen sich durch gute mechanische Eigenschaften und eine hohe Oberflächenqualität aus.

Gemäß der DE 19 905 503 A1 werden Phyllosilikate, die nicht zuvor einem Hydrophobierungsschritt unterzogen worden sind, gleichmäßig in einem thermoplastischen Kunststoff dispergiert, wobei bis zu 10 Gew.-% der in diesem thermoplastischen Kunststoff vorliegenden Monomereinheiten ionische Gruppen wie Carboxylate, Sulfonate oder Phosphate tragen. Vorzugsweise erfolgt gemäß der DE 19 905 503 A1 eine Quellung des Phyllosilikats mit den Monomeren, wobei die anschließende Polymerisation in Gegenwart von bis zu 8 Gew.-% an Wasser unter Rühren bei erhöhten Temperaturen nach einem kationischen Mechanismus verläuft. Alternativ schlägt die DE 19 905 503 A1 vor, thenroplastische Nanocomposites dadurch zu erhalten, dass man den thermoplastischen, ionische Gruppen aufweisenden Kunststoff sowie das Phyllosilikat mittels Extrusion bei Temperaturen im Bereich von 160-320°C mischt.

Die US 5,248,720 hat ein Polyamid-Composite zum Gegenstand, das erhalten wird durch Mischen eines interkalierten Schichtsilikats mit dem Polyamidmonomer und anschließender Polymerisitation in Gegenwart des Schichtsilikats. Das Schichtsilikat hat eine Kationenaustauschkapazität von 50 bis 200 Milliäquivalenten pro 100 g aufzuweisen und in Gegenwart eines organischen Kations eines Lactams dispergiert zu werden, wobei als Dispersionsmedium auf Wasser, Methanol, Ethanol, Propanol, Isopropanol, Polyethylenglycol, 1,4-Butandiol oder Glycerin zurückzugreifen ist. Ein Vorteil des Verfahrens gemäß der US 5,248,720 wird darin gesehen, Polyamide mit hervorragenden Flüssig- oder Gasbarriereeigenschaften zu erhalten.

Der US 5,229,451 ist eine thermotrope Polymerzusammensetzung zu entnehmen, enthaltend ein thermotropes Polymer und 0,025 bis 5 Gew.-% eines die Dichte kontrollierenden partikulären Additivs, von dem mindestens 95 Gew.-% zumindest in einer Dimension eine Größe kleiner 1 µm aufzuweisen haben. Auf diese Weise lassen sich flüssigkristalline Polymere mit verbesserten physikalischen Eigenschaften, beispielsweise hinsichtlich der Zugfestigkeit, erhalten.

Die US 2002/0165306 A1 betrifft Nanocomposite, die erhältlich sind durch Schmelzemischen interkalierter Schichtsilikate mit Oligomeren, wobei diese Mischung anschließend mit einer hochmolekularen Polymermatrix zu vermengen bzw. in dieser zu dispergieren ist. Auf diese Weise sollen Nanocomposite mit verbesserten Barriereeigenschaften und einer verbesserten thermischen Stabilität zugänglich sein.

Die US 4,889,885 befaßt sich mit einem Compositematerial, enthaltend Schichtsilikate, wobei Polyamide als in Frage kommende Composite-Komponenten ausdrücklich ausgeschlossen werden. Die Schichtsilikate sind gleichförmig in einer vinylischen Polymerverbindung, einem Thermoset-Harz oder einem Gummimaterial zu dispergieren. Auf diese Weise sollen sich die mechanischen Eigenschaften, die Hitzebeständigkeit, die Wasserresistenz und die Chemikalienresistenz von Compositematerialien verbessern lassen.

Der vorliegenden Erfindung lag somit die Aufgabe zugrunde, ein Verfahren zur Herstellung von polymeren Verbundmaterialien zur Verfügung zu stellen, das sich für den großtechnischen Einsatz eignet, zu Kunststoffformteilen mit einem sehr hohen Elastizitätsmodul und gleichzeitig hoher Schlagzähigkeit führt und das sich für vielfältige Anwendungsfelder eignet.

Die der Erfindung zu Grunde liegende Aufgabe wird demgemäß gelöst durch ein Verfahren zur Herstellung von thermoplastischen Nanocomposites gemäß den Merkmalen des Patentanspruchs 1.

In einer bevorzugten Ausgestaltung ist vorgesehen, dass im wesentlichen die gesamte Mischung, enthaltend polymerisierbare Monomere und/oder Prepolymere, flüssiges Fluid, und Schichtsilikate, nach Ablauf der zweiten Zeitdauer und vor Initiierung der Polymerisierung der Monomeren und/oder Prepolymeren mindestens einen Filter passiert .

In diesem Zusammenhang ist besonders bevorzugt, dass das oder die Filter Partikel und/oder Agglomerate zurückhalten, die größer als 500 nm sind.

Es wurde demgemäß überraschender Weise gefunden, dass sich mit dem erfindungsgemäßen Verfahren dann Kunststoffformteile mit stark verbesserter Schlagzähigkeit bei gleichzeitig hohem E-Modul erhalten lassen, wenn vor der Polymerisation die erhaltene Mischung einem Filterschritt unterzogen wird.

Eine weitere vorteilhafte Ausführungsform sieht vor, dass ein in Schritt a) eingesetztes bereits zumindest teilweise interkaliert und/oder exfoliert bzw. defoliert vorliegendes Schichtsilikat bei Aufnahme von Schritt c) im wesentlichen in exfolierter bzw. defolierter Form vorliegt.

Ferner ist somit von Vorteil, wenn der Agitationsschritt b) in der Weise durchgeführt wird, insbesondere mittels submikroskopischen Scherens, und/oder für eine solche Zeitdauer aufrecht erhalten wird, bis sämtliches bzw. nahezu sämtliches Schichtsilikat exfoliert vorliegt. Unter exfoliert im Sinne der vorliegenden Erfindung soll insbesondere auch verstanden werden, daß die Schichtsilikate im wesentlichen, insbesondere zu mehr als 95 %, besonders bevorzugt zu mehr als 98 %, in Form individueller Plättchenaggregate, umfassend 2 bis 10 Plättchen, oder bevorzugt als individuelle Plättchen vorliegen. Die erste Zeitdauer variiert regelmäßig in Abhängigkeit von den eingesetzten Mengen, kann jedoch vom Fachmann ohne weiteres je nach Situation eingestellt werden. Das gleiche trifft im allgemeinen auf die erste Temperatur bzw. den ersten Temperaturbereich zu, die bzw. der in weiten Bereichen variiert werden kann.

Besonders zufriedenstellende Resultate stellen sich auch dadurch ein, dass 1 bis 10 Gew. %, insbesondere 2 bis 5 Gew. %, an Schichtsilikat, bezogen auf die Gesamtmenge an polymerisierbaren Monomeren und/oder Prepolymeren, verwendet wird.

Unter Schichtsilikate (Phyllosilikate) versteht man im allgemeinen Silikate, in welchen die SiO₄-Tetraeder in zweidimensionalen Netzwerken verbunden sind. Diese Schichten sind wiederum durch zwischen ihnen vorliegende Kationen miteinander verknüpft. In der Regel liegen als Kationen die des Natriums, Kaliums, Magnesiums, Aluminiums und/oder Calciums in den natürlich vorkommenden Schichtsilikaten vor. Geeignete Schichtsilikate umfassen Montmorrillonit, Smectit, Ellit, Sepiolit, Palygorskit, Muscovit, Allivardit, Amesit, Hectorit, Fluorhectorit, Saponit, Beidellit, Talkum, Nontronit, Stevensit, Bentonit, Glimmer, Vermiculit, Fluorvermiculit, Halloysit und Fluor enthaltende synthetische Talkum-Typen sowie deren Mischungen.

Organophil ausgestattete Schichtsilikate sind z. B. solche, die mit einem organischen Kation behandelt worden sind. Geeignete organische Kationen umfassen z. B. ein Kation auf der Basis von 12-Aminododecansäure sowie Dodecylamoniumionen. Agentien und Verfahren zur Herstellung von organophilen Schichtsilikaten sind dem Fachmann hinlänglich bekannt. Hierbei werden die Schichtsilikate zunächst mit organischen Verbindungen beim Kationenaustausch modifiziert, das heißt organophil eingestellt. Bei diesen organischen Verbindungen handelt es sich, wie vorangehend ausgeführt, im allgemeinen um Tetraalkylammoniumionen, die vorzugsweise eine oder zwei C₁₂₋₁₈ Kohlenstoffketten enthalten. Die organische Ausstattung von Schichtsilikaten erleichtert das Eindringen von Polymerketten zwischen den Schichten und führt im allgemeinen zu einer weiteren Schichtaufweiterung bzw. Exfolierung.

Zudem kann eine organophile Ausstattung von Schichtsilikaten durch Umsetzung mit z. B. Kupferionen (Cu²⁺), Wasserstoffionen (H⁺) und Aluminiumionen (Al³⁺) erfolgen.

Bevorzugt umfasst das flüssige Fluid eine unter den Polymerisationsbedingungen inerte Flüssigkeit, in der Monomere und/oder Prepolymere im gelösten Zustand vorliegen. Selbstverständlich kann das flüssige Fluid auch ein wäßriges System umfassen.

Geeignete polymerisierbare Monomere umfassen z.B. Styrol, Styrolderivate, Amide, Amidderivate, Lactame, Lactamderivate, Acrylate, Acrylatderivate, Methacrylate, Methacrylatderivate sowie deren beliebige Mischungen und Prepolymere nicht- oder teilvernetzte Kautschuke, Epoxidharze, makrozyklische Polyester-Oligomere oder Gemische aus mindestens zwei zu einer Polyadditionspolymerisierung fähigen Monomeren und/oder Prepolymeren, gegebenenfalls in oder als Lösung vorliegend, insbesondere in Form mindestens eines Polyols und mindestens eines Isocyanats.

Geeignete Styrolderivate umfassen neben Styrol z. B. α-Methylstyrol, tert-Butylstyrol und Divinylbenzol. Geeignete Acrylate umfassen u.a. Ethylacrylat, n-Propylacrylat, Isopropylacrylat, n-Butylacrylat, Isobutylacrylat, tert-Butyacrylat, und geeignete Methacrylate umfassen u.a. Methylmethacrylat, Ethylmethacrylat, n-Propylmethacrylat, Isopropylmethacrylat, n-Butylmethacrylat, Isobutylmethacrylat und tert-Butylmethacrylat.

Makrozyklische Polyester-Oligomere sind dem Fachmann bekannt, beispielsweise aus der EP 749 999 B1, und dienen als Precurser für die Herstellung verzweigter und linearer Polyester. Makrozyklische Polyester-Oligomere verfügen im (schmelze)flüssigen Zustand über sehr niedrige, wasserähnliche Viskositäten. Von Vorteil ist ferner, daß die bevorzugte Polymerisationstemperatur in einem Bereich liegt, bei dem gleichfalls eine beschleunigte Kristallisation stattfindet. Dieser Temperaturbereich liegt üblicherweise bei 160° bis 200°C, vorzugsweise bei 160° bis 180°C. Makrozyklische Polyester-Oligomere lassen sich vorzugsweise metallkatalysiert zu Polyestern polymerisieren. Geeignet sind z.B. Metallkatalysatoren auf der Basis von Titan oder Zinn. Exemplarisch seien als in Frage kommende Zinnverbindungen Trialkylzinnalkoxide, beispielsweise Tributylzinnethoxid oder Trimethylzinnethoxid genannt. Bereits in Gegenwart von z. B. 0,5 mol-% an Zinnverbindung wird regelmäßig eine nahezu vollständige Umsetzung erreicht. Als geeignete Titankatalysatoren seien z.B. Isopropyltitanat und Tetrakis-(2-ethylhexyl)-titanat genannt. Bei Verwendung von Titan-Katalysatoren gelingt eine vollständige Umsetzung der makrozyklischen Polyester-Oligomere dann besonders gut, wenn zumindest in geringen Anteilen auch Epoxide oder Thioepoxide zugegen sind. Grundsätzlich kommen jedwede Epoxid- und Thioepoxidverbindungen in Betracht, beispielsweise halogenierte oder nicht halogenierte Alkylenoxide wie Oxiran, Propylenoxid, Epichlor-, Epifluor-, oder Epibromhydrin. Selbstverständlich kommen auch aliphatische Diepoxide wie Dodecatriendioxid, Dipentenoxid und 1,2,7,8-Diepoxyoctan in Frage. Bevorzugt wird auch auf 3,4-Epoxycyclohexyl-3,4-epoxycxyclohexancarboxylat zurückgegriffen. Während die bevorzugte Menge an Epoxiden und/oder Thioepoxiden bei etwa 0,01 bis etwa 3,0 mol-%, bevorzugt bei etwa 0,02 bis 1,0 mol-% und besonders bevorzugt bei etwa 0,1 bis etwa 0,25 mol-%, liegt, wird der Titan-Polymerisationskatalysator üblicherweise in Mengen von etwa 0,01 bis etwa 5,0 mol-%, bevorzugt von etwa 0,02 bis etwa 2,0 mol-% und besonders bevorzugt von etwa 0,2 bis etwa 0,5 mol-%, bezogen auf die Gesamtmole von Monomereinheiten des Polymers, eingesetzt. Diesbezügliche Informationen sind dem Fachmann im übrigen aus der EP 749 999 B1 bekannt.

Makrozyklische Polyester-Oligomere sind z.B. durch Umsetzung mindestens eines Dicarbonsäurechlorids mit einer etwa äquimolaren Menge an mindestens einem Bis-(hydroxyalkyl)ester der Formel

HO-(R-O-C(O)-A-C(O)-O-)ₙ-R-OH

zugänglich, wobei jedes A unabhängig ein m- oder p-verknüpftes divalentes monozyklisches aromatisches oder aliczyklisches Radikal ist, R ein Alkylen- oder Mono- oder Polyoxyalkylenradikal ist, das eine gerade Kette von zwei bis acht Atomen enthält, und n ganze Zahlen von 1 bis 5 umfasst. Die Umsetzung findet vorzugsweise in Lösung in einem im wesentlichen inerten Lösungsmittel in Gegenwart mindestens eines ungehinderten tertiären Amins, beispielsweise Hexamethylentetramin, Chinoclidin oder 1,4-Diazabicyclo-[2.2.2]-oktan, und mindestens eines weiteren tertiären Amins, ausgewählt aus der Gruppe bestehend aus Trialkylaminen und heteroaromatischen tertiären Aminen, statt. Die Konzentration an Dicarbonsäurechlorid und Bis-(hydroxyalkyl)dicarboxylat beträgt vorzugsweise mindestens 0,08 M. Das vorangehend beschriebene Verfahren zur Herstellung makrozyklischer Polyester-Oligomere ist dem Fachmann beispielsweise aus der EP 594 385 B1 bekannt. Ferner lassen sich makrozyklische Polyester-Oligomere durch Erhitzen eines Gemisches, enthaltend lineare Polyester-Polymere oder -Oligomere, organische Lösungsmittel und einen Zinnkatalysator, wie in der EP 699 701 B1 beschrieben, erhalten. Als geeignete Zinnkatalysatoren kommen hierfür z. B. Dialkyzinnoxide und Dialkylzinnalkoxide in Betracht.

Bevorzugte makrozyklische Polyester-Oligomere entstammen der Familie der polymeren Glycolterephthalate und -isophthalate sowie Gemischen hiervon, einschließlich Copolyestern aus Terephthal- und Isophthalsäuren. In Frage kommende makrozyklische Polyester-Oligomere verfügen üblicherweise über eine Mₙ-Wert von weniger als etwa 1500, bevorzugt von etwa 300 bis etwa 800. Besonders bevorzugt wird auf makrozyklische Poly(1,2-ethylen-2,6-naphthalendicarboxylat)- (PEN), Poly(ethylenterephthalat)- (PET) und Poly(1,4-butylenterephthalat)- (PBT)-Oligomere und -Copolyester zurückgegriffen. Mit Hilfe makrozyklischer Polyester-Oligomere sind eine Vielzahl an unterschiedlichen Polyestern in hochreiner Form unproblematisch zugänglich. Exemplarisch seien genannt Poly(ethylenterephthalat), Poly-(1,4-butylenterephthalat), Poly(1,2-ethylen-2,6-naphthalendicarboxylat) und entsprechende Copolyester. Von Vorteil bei der Verwendung von makrozyklischen Polyester-Oligomeren ist unter anderem, daß auf zahlreiche unterschiedliche Katalysatorsysteme zurückgegriffen werden kann, wodurch stets sehr unempfindliche Reaktionssysteme, beispielsweise gegenüber Wasser, zugänglich sind. Aufgrund der unter isothermischen Bedingungen, vorzugsweise bei Temperaturen im Bereich von 160° bis 200° C, stattfindenden Kristallisation des erhaltenen Polesterpolymeren sind große Formteile selbst bei kleiner Stückzahl unter ökonomisch vertretbaren Bedingungen zugänglich. Auch die Serienproduktion von kleineren Bauteilen in sehr großen Stückzahlen läßt sich aufgrund der sehr geringen Zykluszeiten optimieren. Weiterhin kann das makrozyklische Polyester-Oligomer in fester Form als Pulver, Pellet oder in Plättchenform in der Weise zur Verfügung gestellt werden, daß es bereits den Katalysator enthält. Ein makrozyklisches Polyester-Oligomer für die Herstellung von Polybutylenterephthalat (PBT) ist beispielsweise unter dem Handelsnamen CBT® Resin der Firma Cyclics Cooperation, Schwarzheide, kommerziell erhältlich.

Mit dem erfindungsgemäßen Verfahren lassen sich z. B. Polyamid-, Polystyrol-, Polyurethan- oder Poly(meth)acrylat-, Styrol(co)polymer-, Polycarbonat-, Polyester-, Polyether-, Polyimid-, Polyphenylenether-, Poly(meth)acrylnitril-, Polysulfon-, Polyvinylclorid-, Epoxidharz-, Phenolharz- oder Polyolefin-Verbundmaterialien herstellen.

Unter Polyamide sind im allgemeinen beliebige Polymere mit Amidbindungen (-CONH-) zu verstehen, beispielsweise PA6, PA8 oder PA 12. Polyamid bildende Monomere umfassen z. B. Lactame wie ε-Caprolactam, Capryllactam und Lauryllactam sowie deren Mischungen. Geeignete Polyamide sind auch über die Umsetzung von Dicarbonsäuren, wie Adipinsäure, Pimelinsäure, Azlainsäure oder Terephthalsäure, mit Diaminen, wie Hexamethylendiamin, Tetramethylendiamin oder Oktamethylendiamin, erhältlich. Besonders bevorzugt sind polymere Verbundwerkstoffe auf der Basis von Polyamid 6 (erhalten aus ε-Caprolactam) und Polyamid 6-6 (erhalten aus Hexamethylendiamin und Adipinsäure, auch als AH-Salz bekannt). Beispielsweise kann bei der Durchführung des erfindungsgemäßen Verfahrens eine wässrige Lösung des AH-Salzes mit dem organophil ausgestatteten, zumindest teilweise interkalierten Schichtsilikat, z.B. in einer Menge von 2 bis 5 Gew.-%, eingesetzt werden.

Geeignete Styrol(co)polymer-Verbundmaterialien umfassen z.B. solche auf der Basis von ASA-, ABS-, und SAN-Polymerisaten.

Unter Epoxidharze im Sinne der vorliegenden Erfindung sollen Prepolymere bzw. Oligomere Verbindungen verstanden werden, die mehr als eine Epoxygruppe pro Mol aufweisen und zur Herstellung von Duroplasten geeignet sind. Epoxidharze lassen sich z.B. durch Umsetzung von Cresolen, insbesondere o-Cresol, oder Bisphenol A mit reaktiven Epoxiden, insbesondere Epichlorhydrin erhalten. Die Epoxygruppen des Epoxidharzes können z.B. durch Addition von Aminen, z.B. polyfunktionellen aliphatischen oder aromatischen Aminen, oder Säureanhydriden zur Reaktion gebracht und der Epoxidharz auf diese Weise gehärtet werden. Als polyfunktionelles Amin kommt z.B. 4,4-Diaminodiphenylmethan in Betracht.

Für die Herstellung von Polyolefinen kann auf heterogen sowie homogen katalysierte Polymerisierungsverfahren zurückgegriffen werden. Zur heterogenen Katalyse von z.B. Ethylen und/oder Propylen eignen sich z.B. die Ziegler-Natta-Polymerisation. Homogen katalysierte Polymerisierungen von Olefinen, insbesondere von α-Olefinen wie Ethylen und Propylen, lassen sich auch mit sogenannten Metallocen-Katalysatoren bewerkstelligen. Die vorgenannten Verfahren und Katalysatoren sind dem Fachmann hinlänglich bekannt.

Überraschenderweise wurde gefunden, daß sich das erfindungsgemäße Verfahren ebenfalls eignet, um im Wege der Gasphasenpolymerisation erfindungsgemäße polymere Verbundmaterialien herzustellen. Hierzu reicht es beispielsweise bereits aus, wenn niedermolekulare, dünnflüssige oder in einem Fluid gelöste Prepolymere des herzustellenden polymeren Endproduktes in Verfahrensschritt a) des erfindungsgemäßen Verfahrens zum Einsatz kommen. Dabei kann z.B. vorgesehen sein, daß nach Verfahrensschritt b), insbesondere nach Verfahrensschritt b'), die erhaltene Mischung in den Gasphasenreaktor überführt wird, um die weiteren Verfahrensschritte durchzuführen, gegebenenfalls in Gegenwart von bereits nach dem Gasphasenpolymerisationsverfahren hergestellten Material an Prepolymeren und/oder Polymeren.

Selbstverständlich ist es ebenfalls möglich, das erfindungsgemäße Verfahren auf Polymerisierungen anzuwenden, die im wäßrigen Milieu stattfinden. Beispielhaft sei auf radikalische Polymerisierungen verwiesen.

Liegen die Monomeren bzw. die Prepolymeren in einem inerten Lösungsmittel bzw. Fluid vor, umfasst dieses vorzugsweise Kohlenwasserstoffe, insbesondere Pentan, Hexan, Heptan, deren isomere Formen, sowie Benzol und/oder Toluol. In einer bevorzugten Ausführungsform kommen in dem Verfahrensschritt a) des erfindungsgemäßen Verfahrens als unter den Polymerisationsbedingungen inertes Lösungsmittel bzw. Fluid z.B. Benzol und/oder Toluol zum Einsatz. Vorzugsweise liegen das/die Monomere und/oder Prepolymere in dem Fluid im gelösten Zustand vor.

Zwecks Initiierung der Polymerisation in Verfahrensschritt c) kann, sofern erforderlich oder gewünscht, die Temperatur des Reaktionssystems kurzzeitig oder dauerhaft angehoben werden.

In einer bevorzugten Ausgestaltung stellt die Polymerisation eine anionische Polymerisation, wie sie z.B. bei der Herstellung von Poly(meth)acrylaten oder Polystyrol zum Einsatz kommt, oder eine Additionspolymerisation, z.B. für die Herstellung von Polyurethanen, dar.

Die anionische Polymerisation wird bevorzugt unter Verwendung von Katalysatoren, bevorzugt unterstützt von Aktivatoren, initiiert.

Als Katalysatoren kommen bevorzugt basische Verbindungen wie Natriumhydrid, Natriummethoxid, Natriumhydroxhyd, Natriumamid sowie die Kaliumsalze von Lactamen in Frage. Diese basischen Katalysatoren können entweder allein oder in Kombination eingesetzt werden. Geeignete Mengen an basischen Katalysatoren liegen im Bereich von etwa 0,01 bis 10mol% des zu polymerisierenden Monomeren.

Geeignete Aktivatoren bewirken im allgemeinen eine Reaktion mit dem basischen Katalysator unter Bildung eines aktiven Zwischenprodukts, das die anionische Polymerisation initiiert. Als bevorzugte Aktivatoren kommen z.B. Acyllactam, acyliertes e-Caprolactam, Di-Lactame, beispielsweise Methylen-bis-caprolactam, N-Acetylcaprolactam, Essigsäureanhydrid, Kohlendioxid, Phenylisocyanat, und Cyanurchlorid in Frage.

Besonders bevorzugte anionische Polymerisationsverfahren zeichnen sich dadurch aus, dass mindestens ein erster Teil der nach der zweiten Zeitdauer (Schritt b) und gegebenenfalls nach der Filtrierung (Schritt b') erhaltenen Mischung abgezweigt und/oder mindestens eine erste, nach Verfahrensschritt b) oder b') erhaltene Mischung bereitgestellt und mit mindestens einem Aktivator vermengt wird bzw. werden, und dass mindestens ein zweiter Teil der nach der zweiten Zeitdauer und gegebenenfalls der Filtrierung erhaltenen Mischung abgezweigt und/oder mindestens eine zweite, nach Verfahrensschritt b) oder b') erhaltene Mischung bereitgestellt und/oder mit mindestens einem Katalysator vermengt wird bzw. werden, und wobei diese präparierten ersten und zweiten Teile und/oder diese präparierten ersten und zweiten Mischungen für den Verfahrensschritt der Initiierung der Polymerisation und/oder der Polymerisation wieder zusammengeführt, insbesondere gleichmäßig vermengt, werden, insbesondere in der Eingangszone eines Reaktionsextruders. Demgemäß ist es besonders vorteilhaft, die insbesondere gefilterte Mischung aus Monomeren bzw. Prepolymeren und behandelten Schichtsilikaten aufzuteilen und den einen Teil mit einem Katalysator und den anderen Teil mit einem Aktivator zu versehen und beide Teile anschließend in einer Polymerisationsanlage wieder zusammen zu führen. Hierfür eignet sich insbesondere der gleichmäßige Eintrag in die Eingangszone eines Reaktionsextruders, der vorzugsweise als Compounder, z.B. in Form eines gleichlaufenden Doppelschneckenextruders, vorliegt. Die Polymerisation in dem Compounder kann sich über eine Verweilzeit von nur wenigen Sekunden bis zu einigen Minuten erstrecken und ist im allgemeinen mit dem Austritt einer viskosen Schmelze eines hochmolekularen Verbundmaterials aus dem Mundstück der Düse des Compounders abgeschlossen. Das erhaltene Verbundmaterial kann beispielsweise anschließend in einem Granulator geschnitten und abgesackt werden.

Die Endverarbeitung der erhaltenen Verbundmaterialien zu fertigen Kunststoffformteilen erfolgt in der Regel in konventioneller Weise durch Extrudieren oder Spritzgießen, kann jedoch ebenfalls in einer bevorzugten Ausführungsform darin bestehen, dass das Polymerisat unmittelbar zu einem Profil ausgeformt wird.

Gemäß einem weiteren Aspekt des erfindungsgemäßen Verfahrens kann die Polymerisation der insbesondere gefilterten Mischung, enthaltend Monomere bzw. Prepolymere und behandelte, d.h. organophil ausgestattete Schichtsilikate, auch in einer so genannten Reaktions-Injektions-Anlage (RIM) stattfinden, wie z. B. von P. Wagner in Kunststoffe 370, H 10, Seiten 588 ff., in dem Artikel "Verarbeitung von Caprolactam zu Polyamid-Formteilen nach dem RIM-Verfahren" beschrieben.

Erfindungsgemäß kann in einer bevorzugten Ausführungsform ferner vorgesehen sein, dass zumindest die Initiierung der Polymerisation gemäß Schritt c) und/oder die Polymerisation gemäß Schritt d) zumindest anfänglich, und insbesondere auch die Vermengung von Monomeren und/oder Prepolymeren mit Schichtsilikat während der ersten Zeitdauer (Schritt a)) und/oder die Agitation der erhaltenen Mischung während der zweiten Zeitdauer (Schritt b und/oder b'), unter einer Inertgasatmosphäre, insbesondere auch unter Ausschluss von Wasser, durchgeführt werden.

Ferner ist vorgesehen, dass die Agitation während der ersten und/oder zweiten Zeitdauer Scheren, Rühren, Schütteln, Vibrieren und/oder die Anwendung von Ultraschall umfasst.

Für das Scheren werden bevorzugt Dissolver, Scherwalzen insbesondere schnell laufende, Rotor-Stator-Dispergierwerke und/oder Perlmühlen eingesetzt.

Vorzugsweise wird die Agitation, insbesondere das Scheren, in der Weise eingestellt, dass zumindest in Teilen eine submikroskopische Scherung erzielt wird.

Ein weiterer Aspekt des erfindungsgemäßen Verfahrens sieht vor, dass die erste und/oder zweite Zeitdauer, die erste und/oder zweite Temperatur und/oder die Stärke der Agitation, insbesondere der Scherung, während der ersten und/oder zweiten Zeitdauer in der Weise gewählt werden, dass der Großteil der Schichtsilikate in dem Monomer und/oder dem Prepolymeren defoliert bzw. exfoliert und/oder dispergiert vorliegen.

Als besonders vorteilhaft hat sich erwiesen, dass die zweite Zeitdauer insgesamt mindestens sechs Stunden, vorzugsweise mindestens zwölf Stunden und besonders bevorzugt mindestens 18 Stunden beträgt.

Die dritte Zeitdauer hängt im allgemeinen naturgemäß von der für das erfindungsgemäße Verfahren gewählten Polymerreaktion ab, beispielsweise von den Monomeren, deren Mengen, der Reaktionstemperatur, den Katalysatoren, dem Druck, etc., und kann daher regelmäßig in weiten Bereichen variiert werden. Diese Bedingungen, und folglich auch die dritte Zeitdauer, sind dem Fachmann geläufig und werden von diesem im allgemeinen in der Weise eingestellt, dass ein möglichst optimaler Umsatz erzielt wird.

Eine Weiterentwicklung des Verfahrens zeichnet sich zudem dadurch aus, dass die erste, zweite und/oder dritte Temperatur oder der erste, zweite und/oder dritte Temperaturbereich unterhalb, insbesondere mehr als 20°C unterhalb, der Erweichungs- und/oder Schmelzetemperatur des polymeren Verbundmaterials oder unterhalb der Summe aus 100°C + Erweichungstemperatur des polymeren Verbundmaterials liegen. Die erste, zweite und/oder dritte Temperatur oder der erste, zweite und/oder dritte Temperaturbereich können ansonsten im allgemeinen in weiten Bereichen variiert werden. Beispielsweise hängt die dritte Temperatur bzw. der dritte Temperaturbereich in der Regel von der jeweiligen Polymerreaktion, den Mengen und der Natur beispielsweise der gewählten Monomeren, Katalysatoren, Aktivatoren, Lösungsmittel und/oder Reaktionsgefäße, etc., ab. Für den Fachmann ergeben sich geeignete Temperaturbereiche, insbesondere auch geeignete dritte Temperaturbereiche, aus seinem Fachwissen bzw. der zu den gewählten Polymerreaktionen einschlägigen Fachliteratur.

Gemäß einen weiteren Aspekt können weitere Füllstoffe, insbesondere brandhemmende Füllstoffe, kurze und/oder Langfasern und/oder anorganische Oxide und/oder Salze, und/oder Polymere mit den Monomeren und/oder Prepolymeren, insbesondere in den Verfahrensschritten a) und/oder b), vermengt werden.

Überdies kann vorgesehen sein, dass das Ausmaß der Defolierung bzw. Exfolierung und/oder Dispergierung der Schichtsilikate während der zweiten Zeitdauer kontinuierlich oder stichprobenartig kontrolliert wird.

Sofern in dem Verbundmaterial noch Restmonomere zugegen sein sollten, können diese in bekannter Weise, z. B. durch Extraktion des Granulats in Wasser, entfernt werden.

Gemäß einer besonders bevorzugten Ausruhrungsform des erfindungsgemäßen Verfahrens verwendet man Monomere, die in aufgeschmolzenem Zustand vorliegen, beispielsweise Caprolactame, insbesondere ε-Caprolactame. In diese Monomerschmelze mischt man vorzugsweise ein Pulver eines organophil ausgestatteten Schichtsilikats, insbesondere Montmorillonit, unter Rühren hinzu. Nach dem Einmischen wird die erhaltende Suspension, insbesondere enthaltend ε-Caprolactame, vorzugsweise bei Temperaturen im Bereich von 90 bis 150°C Celsius für mindestens 18 Stunden unter einer Inertgasatmosphäre, z.B. einer Stickstoffatmosphäre, gerührt und gleichzeitig einem intensiven Scherprozess, z.B. in Dissolvern, Scherwalzen, schnellaufenden Rotor-Stator-Dispergierwerken, Perlmühlen und/oder ähnlichen Geräten, unterworfen. Hierbei wird vielfach bereits eine Scherung im submikroskopischen Bereich erzielt. Die Verweilzeit und die Scherung wird hierbei vorzugsweise derart eingestellt, dass die Schichtsilikatpartikel zum überwiegenden Teil, dass heißt in einer Menge größer 50%, insbesondere größer 80%, defoliert bzw. exfoliert und/oder dispergiert vorliegen. Je höher die Temperatur gewählt wird, desto so schneller geht die Auflösung bzw. Aufweitung der Schichten des Schichtsilikates vonstatten.

In einer besonders vorteilhaften Ausgestaltung umfasst das erfindungsgemäße Verfahren zur Herstellung von thermoplastischen Nanocomposites die folgenden Schritte:
a) das Vermengen mindestens eines polymerisierbaren Monomeren und/oder Prepolymeren im zumindest teilweise schmelzeflüssigen oder flüssigen Zustand und/oder in einem flüssigen Fluid mit mindestens einem zumindest partiell organophil ausgestatteten, zumindest teilweise interkalierten Schichtsilikat, insbesondere unter Agitation, für eine erste Zeitdauer bei einer ersten Temperatur oder in einem ersten Temperaturbereich,
b) Agitation der nach a) erhaltenen Mischung für eine zweite Zeitdauer bei einer zweiten Temperatur oder in einem zweiten Temperaturbereich, wobei die Agitation während der ersten und/oder zweiten Zeitdauer Scheren, Rühren, Schütteln, Vibrieren und/oder die Anwendung von Ultraschall umfasst und in der Weise eingestellt wird, daß zumindest in Teilen, vorzugsweise im wesentlichen vollständig, eine submikroskopische Scherung erzielt wird unter Erhalt dispergierter, exfolierter Schichtsilikate,
b') Passieren der Mischung, enthaltend polymerisierbare Monomere und/oder Prepolymere, gegebenenfalls flüssiges Fluid, und Schichtsilikate, insbesondere im wesentlichen der gesamten Mischung, nach Ablauf der zweiten Zeitdauer und/oder vor Initiierung der Polymerisierung der Monomeren und/oder Prepolymeren durch mindestens einen Filter, der Partikel und/oder Agglomerate zurückhält, die größer als 1000 nm, insbesondere größer als 500 nm, sind,
c) Initiierung der Polymerisierung der gemäß Schritt b') erhaltenen Mischung an Monomeren und/oder Prepolymeren und im wesentlichen exfolierten Schichtsilikate und
d) anschließende Polymerisierung der in der Mischung vorliegenden polymerisierbaren Monomeren und/oder Prepolymeren für eine dritte Zeitdauer bei einer dritten Temperatur oder in einem dritten Temperaturbereich,
wobei zumindest die Initiierung der Polymerisation (Schritt c) und die Polymerisation (Schritt d) zumindest anfänglich, und insbesondere auch die Vermengung von Monomeren und/oder Prepolymeren mit Schichtsilikat während der ersten Zeitdauer (Schritt a) und/oder die Agitation der erhaltenen Mischung während der zweiten Zeitdauer (Schritt b) und/oder das Filtern der erhaltenen Mischung (Schritt b'), unter einer Inertgasatmosphäre, insbesondere auch unter Ausschluß von Wasser, durchgeführt werden.

Der vorliegenden Erfindung liegt die überraschende Erkenntnis zu Grunde, dass man auch mit preisgünstigen mineralischen Füllstoffen thermoplastische Nanocomposite herstellen kann, deren mechanische Eigenschaften bei gleichbleibender oder besserer Schlagzähigkeit sich um mehr als 100% gegenüber unverstärkten Thermoplasten verbessern lassen. Auf den Einsatz von Kurzglasfasern in Spritzgießmassen ist man demgemäß nicht mehr angewiesen. Insbesondere lassen sich auch großformatige Kunststoffformteile ohne weiteres mit guten Steifigkeits- und Zähigkeitseigenschaften herstellen. Mit dem erfindungsgemäßen Verfahren gelingt es überdies, insbesondere auch größere Formteile, obwohl mit Nanopartikeln gefüllt, transparent oder transluzent auszustatten. Auf der Basis von erfindungsgemäßen Verbundmaterialien aus Polystyrol, Polymethacrylat, Polycarbonaten oder Polyurethanen, die nach dem öffnungsgemäßen Verfahren hergestellt worden sind, lässt sich zudem Glas in größerem Umfang substituieren, beispielsweise in der Automobilindustrie. So kommen die nach dem erfindungsgemäßen Verfahren zugänglichen transparenten Kunststoffformteile u. a. als Seitenscheiben von Automobilen in Frage. Darüber hinaus zeichnen sich die nach dem erfindungsgemäßen Verfahren erhaltenen Kunststoffformteile durch eine reduzierte Permeation und Brennbarkeit aus.

Die in der vorstehenden Beschreibung sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verfahren zur Herstellung von thermoplastischen Nanocomposites, umfassend
a) das Vermengen mindestens eines polymerisierbaren Monomeren und/oder Prepolymeren im zumindest teilweise schmelzeflüssigen oder flüssige Zustand und/oder in einem flüssigen Fluid mit mindestens einem zumindest partiell organophil ausgestatteten, zumindest teilweise interkalierten Schichtsilikat für eine erste Zeitdauer bei einer ersten Temperatur oder in einem ersten Temperaturbereich,
b) Agitation der nach a) erhaltenen Mischung für eine zweite Zeitdauer bei einer zweiten Temperatur oder in einem zweiten Temperaturbereich,
b') Passieren im wesentlichen der gesamten gemäß Schritt b) erhaltenen Mischung, enthaltend polymersierbare Monomere und/oder Prepolymere und Schichtsilikate, durch mindestens einen Filter nach Ablauf der zweiten Zeitdauer und vor Initiierung der Polymerisierung unter Zurückhaltung von Partikeln und/oder Agglomeraten, die größer als 1000 nm sind,
c) Initiierung der Polymerisierung der gemäß Schritt b') erhaltenen Mischung an Monomeren und/oder Prepolymeren und Schicktsilikaten und
d) anschließende Polymerisierung der in der Mischung vorliegenden polymerisierbaren Monomeren und/oder Prepolymere für eine dritte Zeitdauer bei einer dritten Temperatur oder in einem dritten Temperaturbereich.

2. Verfahren nach Anspruch 1, **dadurch gekennzeichnet, daß**
das Vermengen von Schritt a) unter Agitation geschieht.

3. Verfahren nach Anspruch 1 oder 2, **dadurch gekennzeichnet, daß**
die gesamte Mischung, enthaltend polymerisierbare honomere und/oder Prepolymere und Schichtsilikate nach Ablauf der zweiten Zeitdauer und vor Initiierung der Polymerisierung der Monomeren und/oder Prepolymeren mindestens einen Filter passiert.

4. Verfahren nach einem der Ansprüche 1 bis 3, **dadurch gekennzeichnet, daß**
der oder die Filterpartikel und/oder Agglomeraten zurückhalten, die größer als 500 nm sind.

5. Verfahren nach einem der vorangehenden Ansprüche, **dadurch gekennzeichnet, daß**
ein bereits zumindest teilweise exfoliert vorliegendes Schichtsilikat in Schritt a) eingesetzt wird und/oder wobei das Schichtsilikat bei Aufnahme von Schritt c) im wesentlichen in exfolierter Form vorliegt.

6. Verfahren nach einem der vorangehenden Ansprüche, **dadurch gekennzeichnet, daß**
1 bis 10 Gew. %, insbesondere 2 bis 5 Gew. %, an Schichtsilikat, bezogen auf die Gesamtmenge an polymerisierbaren Monomeren und/oder Prepolymeren, verwendet wird.

7. Verfahren nach einem der vorangehenden Ansprüche, **dadurch gekennzeichnet, daß**
das flüssige Fluid ein unter den Polymerisationsbedingungen inerte Flüssigkeit umfasst, in der Monomere und/oder Prepolymere im gelösten Zustand vorliegen.

8. Verfahren nach einem der vorangehenden Ansprüche, **dadurch gekennzeichnet, daß**
das flüssige Fluid ein wäßriges System umfaßt.

9. Verfahren nach einem der vorangehenden Ansprüche, **dadurch gekennzeichnet, daß**
polymerisierbare Monomere oder Prepolymere Styrol, Styrolderivate, Amide, Amidderivate, Lactame, Lactamderivate, Acrylate, Acrylatderivate, Methacrylate, Methacrylatderivate sowie deren beliebige Mischungen und Prepolymere nicht- oder teilvernetzte Kautschuke, Epoxidharze, makrozyklische Polyester-Oligomere oder Gemische aus mindestens zwei zu einer Polyadditionspolymerisierung fähigen Monomeren und/oder Prepolymeren, gegebenenfalls in oder als Lösung vorliegend, insbesondere in Form mindestens eines Polyols und mindestens eines Isocyanats, umfassen.

10. Verfahren nach einem der Ansprüche 7 bis 9, **dadurch gekennzeichnet, daß** die Polymerisation eine anionische Polymerisation oder eine Additionspolymerisation umfasst.

11. Verfahren nach Anspruch 10, **dadurch gekennzeichnet, daß,**
sofern die Polymerisation eine anionische Polymerisation darstellt, mindestens ein erster Teil der nach der zweiten Zeitdauer (Schritt b) und gegebenenfalls nach der Filtrierung (Schritt b') erhaltenen Mischung abgezweigt und/oder mindestens eine erste, nach Verfahrensschritt b) oder b') erhaltene Mischung bereitgestellt und mit mindestens einem Aktivator vermengt wird bzw. werden, und daß mindestens ein zweiter Teil der nach der zweiten Zeitdauer und gegebenenfalls der Filtrierung erhaltenen Mischung abgezweigt und/oder mindestens eine zweite, nach Verfahrensschritt b) oder b') erhaltene Mischung bereitgestellt und mit mindestens einem Katalysator vermengt wird bzw. werden, und wobei diese präparierten ersten und zweiten Teile und/oder diese präparierten ersten und zweiten Mischungen für den Verfahrensschritt der Initiierung der Polymerisation und/oder der Polymerisation wieder zusammengeführt, insbesondere gleichmäßig vermengt, werden, insbesondere in der Eingangszone eines Reaktionsextruders.

12. Verfahren nach einem der Ansprüche 10 oder 11, **dadurch gekennzeichnet, daß** zumindest die Initiierung der Polymerisation und die Polymerisation zumindest anfänglich, und insbesondere auch die Vermengung von Monomeren und/oder Prepolymeren mit Schichtsilikat während der ersten Zeitdauer und/oder die Agitation der erhaltenen Mischung während der zweiten Zeitdauer, unter einer Inertgasatmosphäre, insbesondere auch unter Ausschluss von Wasser, durchgeführt werden.

13. Verfahren nach einem der vorangehenden Ansprüche, **dadurch gekennzeichnet, daß**
die Agitation während der ersten und/oder zweiten Zeitdauer Scheren, Rühren, Schütteln, Vibrieren und/oder die Anwendung von Ultraschall umfasst.

14. Verfahren nach Anspruch 13, **dadurch gekennzeichnet, daß**
für das Scheren Dissolver, Scherwalzen, insbesondere schnellaufende, Rotor-Strator-Dispergierwerke und/oder Perlmühlen eingesetzt werden.

15. Verfahren nach Anspruch 13 oder 14, **dadurch gekennzeichnet, daß**
die Agitation, insbesondere das Scheren, in der Weise eingestellt wird, daß zumindest in Teilen eine submikroskopische Scherung erzielt wird.

16. Verfahren nach einem der vorangehenden Ansprüche, **dadurch gekennzeichnet, daß**
die erste und/oder zweite Zeitdauer, die erste und/oder zweite Temperatur und/oder die Stärke der Agitation, insbesondere der Scherung, während der ersten und/oder zweiten Zeitdauer in der Weise gewählt werden, daß der Großteil der Schichtsilikate in dem Monomer und/oder dem Prepolymeren defoliert und/oder dispergiert vorliegen.

17. Verfahren nach einem der vorangehenden Ansprüche, **dadurch gekennzeichnet, daß**
die zweite Zeitdauer insgesamt mindestens sechs Stunden, vorzugsweise mindestens zwölf Stunden und besonders bevorzugt mindestens 18 Stunden beträgt.

18. Verfahren nach einem der vorangehenden Ansprüche, **dadurch gekennzeichnet, daß**
die erste, zweite und/oder dritte Temperatur oder der erste, zweite und/oder dritte Temperaturbereich unterhalb, insbesondere mehr als 20°C unterhalb, der Erweichungs- und/oder Schmelzetemperatur des polymeren Verbundmaterials oder unterhalb der Summe aus 100°C und Erweichungstemperatur des polymeren Verbundmaterials liegt.

19. Verfahren nach einem der vorangehenden Ansprüche, **dadurch gekennzeichnet, daß**
das inerte Lösungsmittel Kohlenwasserstoffe, insbesondere Pentan, Hexan, Heptan, deren isomere Formen, sowie Benzol und/oder Toluol, umfasst.

20. Verfahren nach einem der vorangehenden Ansprüche, **dadurch gekennzeichnet, daß**
weitere Füllstoffe, insbesondere brandhemmende Füllstoffe, kurze und/oder Langfasern und/oder anorganische Oxide und/oder Salze, und/oder Polymere mit den Monomeren und/oder Prepolymeren, insbesondere in den Verfahrensschritten a) und/oder b), vermengt werden.

21. Verfahren nach einem der vorangehenden Ansprüche, **dadurch gekennzeichnet, daß**
das Ausmaß der Defolierung bzw. Exfolierung und/oder Dispergierung der Schichtsilikate während der zweiten Zeitdauer kontinuierlich oder stichprobenartig kontrolliert wird.

22. Verfahren nach Anspruch 1 zur Herstellung von thermoplastischen Nanocomposites, **dadurch gekennzeichnet, dass**
a) das Vermengen mindestens eines polymerisierbaren Monomeren und/oder Prepolymeren im zumindest teilweise schmelzeflüssigen oder flüssigen Zustand und/oder in einem flüssigen Fluid mit mindestens einem partiell organophil ausgestatteten, zumindest teilweise interkalierten Schichtsilikat, insbesondere unter Agitation, für eine erste Zeitdauer bei einer ersten Temperatur oder in einem ersten Temperaturbereich,
b) Agitation der nach a) erhaltenen Mischung für eine zweite Zeitdauer bei einer zweiten Temperatur oder in einem zweiten Temperaturbereich, wobei die Agitation während der ersten und/oder zweiten Zeitdauer Scheren, Rühren, Schütteln, Vibrieren und/oder die Anwendung von Ultraschall umfasst und in der Weise eingestellt wird, dass zumindest in Teilen, vorzugsweise im wesentlichen vollständig, eine submikroskopische Scherung erzielt wird unter Erhalt dispergierter, exofolierter Schichtsilikate,
b') Passieren der Mischung, enthaltend polymersierbare Monomere und/oder Prepolymere, gegebenenfalls flüssiges Fluid, um Schichtsilikate, insbesondere im wesentlichen der gesamten Mischung, nach Ablauf der zweiten Zeitdauer und/oder vor Initiierung der Polymerisierung der Monomeren und/oder Prepolymeren durch mindestens einen Filter, der Partikel und/oder Agglomerate zurückhält, die größer als 1000 nm, insbesondere größer als 500 nm, sind.
c) Initiierung der Polymerisierung der gemäß Schritt b') erhaltenen Mischung an Monomeren und/oder Prepolymeren und im wesentlichen exfolierten Schichtsilikaten und
d) anschließende Polymerisierung der in der Mischung vorliegenden polymerisierbaren Monomeren und/oder Prepolymeren für eine dritte Zeitdauer bei einer dritten Temperatur oder in einem dritten Temperaturbereich,
wobei zumindest die Initiierung der Polymerisation (Schritt c) und die Polymerisation (Schritt d) zumindest anfänglich, und insbesondere auch die Vermengung von Monomeren und/oder Prepolymeren mit Schichtsilikat während der ersten Zeitdauer (Schritt a) und/oder die Agitation der erhaltenen Mischung während de zweiten Zeitdauer (Schritt b) und/oder das Filtern der erhaltenen Mischung (Schritt b'), unter einer Inertgasatmosphäre, insbesondere auch unter Ausschluß von Wasser, durchgeführt werden.

## Claims

1. Process for producing thermoplastic nanocomposites, comprising
a) the mixing of at least one polymerisable monomer and/or pre-polymer in the at least partially molten or liquid state and/or in a liquid fluid with at least one at least partially organophilic, at least partially intercalated layered silicate for a first period of time at a first temperature or in a first temperature range,
b) the agitation of the mixture obtained pursuant to a) for a second period of time at a second temperature or in a second temperature range,
b') the passing of essentially the entire mixture obtained pursuant to step b) containing polymerisable monomers and/or pre-polymers and layered silicates through at least one filter upon the expiration of the second period of time and before the initiation of the polymerisation while retaining particles and/or agglomerates with a size exceeding 1000 nm,
c) the initiation of the polymerisation of the mixture of monomers and/or pre-polymers and layered silicates obtained pursuant to step b') and
d) the subsequent polymerisation of the polymerisable monomers and/or pre-polymers which are present in the mixture for a third period of time at a third temperature or in a third temperature range.

2. Process according to Claim 1, **characterised in that**
the mixing of step a) is made under agitation.

3. Process according to Claim 1 or 2, **characterised in that**
the entire mixture containing polymerisable monomers and/or pre-polymers and layered silicates passes at least one filter upon the expiration of the second period of time and before the initiation of the polymerisation of the monomers and/or pre-polymers.

4. Process according to any of the Claims 1 to 3**, characterised in that**
the filter or the filters retain particles and/or agglomerates with a size exceeding 500 nm.

5. Process according to any of the preceding Claims, **characterised in that**
a layered silicate which is already present at least partially exfoliated is used in step a) and/or wherein the layered silicate is present essentially in an exfoliated form upon the initiation of step c).

6. Process according to any of the preceding Claims, **characterised in that**
1 to 10 % by weight, in particular 2 to 5 % by weight of layered silicate in relation to the total amount of polymerisable monomers and/or pre-polymers are used.

7. Process according to any of the preceding Claims, **characterised in that**
the liquid fluid comprises a liquid which is inert under the polymerisation conditions in which monomers and/or pre-polymers are present in the dissolved state.

8. Process according to any of the preceding Claims, **characterised in that**
the liquid fluid comprises an aqueous system.

9. Process according to any of the preceding Claims, **characterised in that**
polymerisable monomers or pre-polymers comprise styrene, styrene derivatives, amides, amide derivatives, lactams, lactam derivatives, acrylates, acrylate derivatives, methacrylates, methacrylate derivatives as well as any mixtures and pre-polymers thereof, non-cross-linked or partially cross-linked rubbers, epoxy resins, macrocyclic polyester oligomers or mixtures of at least two monomers and/or pre-polymers which are capable of a polyaddition polymerisation, if appropriate, present in a or as a solution, in particular in the form of at least one polyol and at least one isocyanate.

10. Process according to any of the Claims 7 to 9, **characterised in that**
the polymerisation comprises an anionic polymerisation or an addition polymerisation.

11. Process according to Claim 10, **characterised in that,**
if the polymerisation is an anionic polymerisation, at least a first part of the mixture which is obtained after the second period of time (step b) and, if appropriate, after the filtration (step b') is separated and/or at least a first mixture which is obtained according to process step b) or b') is provided and is/are mixed with at least one activator and that at least a second part of the mixture which is obtained after the second period of time and, if appropriate, after the filtration is separated and/or at least a second mixture which is obtained according to process step b) or b') is provided and is/are mixed with at least one catalyst and where these prepared first and second parts and/or these prepared first and second mixtures are re-united for the process step of initiating the polymerisation and/or the polymerisation, in particular are uniformly mixed, in particular in the inlet zone of a reaction extruder.

12. Process according to any of the Claims 10 or 11, **characterised in that**
at least the initiation of the polymerisation and the polymerisation, at least initially and, in particular also the mixing of monomers and/or pre-polymers with layered silicate during the first period of time and/or the agitation of the mixture obtained during the second period of time, are carried out under an inert gas atmosphere, in particular also under the exclusion of water.

13. Process according to any of the preceding Claims, **characterised in that**
the agitation during the first and/or the second period of time comprises shearing, stirring, shaking, vibrating and/or the use of ultrasound.

14. Process according to Claim 13, **characterised in that**
dissolvers, shear rollers, in particular high-speed rollers, rotor-strator disperser systems and/or bead mills are used for the shearing.

15. Process according to Claim 13 or 14, **characterised in that**
the agitation, in particular the shearing, are adjusted in such a manner that at least in parts a sub-microscopic shearing is accomplished.

16. Process according to any of the preceding Claims, **characterised in that**
the first and/or second period of time, the first and/or second temperature and/or the strength of the agitation, in particular of the shearing, during the first and/or second period of time are selected in such a manner that the major part of the layered silicates in the monomer and/or in the pre-polymer are present in a defoliated and/or dispersed state.

17. Process according to any of the preceding Claims, **characterised in that**
the second period of time takes a total of at least six hours, preferably at least twelve hours and particularly preferably at least 18 hours.

18. Process according to any of the preceding Claims, **characterised in that**
the first, second and/or third temperature or the first, second and/or third temperature range lie below, in particular more than 20°C below, the softening temperature and/or the melting temperature of the polymer composite material or below the sum total from 100°C and the softening temperature of the polymer composite material.

19. Process according to any of the preceding Claims, **characterised in that**
the inert solvent comprises hydrocarbons, in particular pentane, hexane, heptane, their isomeric forms as well as benzene and/or toluene.

20. Process according to any of the preceding Claims, **characterised in that**
additional fillers, in particular fire-retardant fillers, short and/or long fibres and/or inorganic oxides and/or salts, and/or polymers are mixed with the monomers and/or pre-polymers, in particular in the process steps a) and/or b).

21. Process according to any of the preceding Claims, **characterised in that**
the extent of the defoliation and/or of the exfoliation and/or of the dispersion of the layered silicates is controlled continuously or by random sampling during the second period of time.

22. Process according to Claim 1 for producing thermoplastic nanocomposites, **characterised in that** it comprises
a) the mixing of at least one polymerisable monomer and/or pre-polymer in the at least partially molten or liquid state and/or in a liquid fluid with at least one partially organophilic, at least partially intercalated layered silicate, in particular under agitation, for a first period of time at a first temperature or in a first temperature range,
b) the agitation of the mixture obtained pursuant to a) for a second period of time at a second temperature or in a second temperature range, with the agitation comprising during the first and/or the second period of time shearing, stirring, shaking, vibrating and/or the use of ultrasound and being adjusted in such a manner that at least in parts, preferably essentially totally, a submicroscopic shearing is accomplished while obtaining dispersed, exfoliated layered silicates,
b') the passing of the mixture containing polymerisable monomers and/or pre-polymers, if appropriate, liquid fluid, around layered silicates, in particular essentially of the entire mixture, upon the expiration of the second period of time and/or before the initiation of the polymerisation of the monomers and/or pre-polymers through at least one filter which retains particles and/or agglomerates with a size exceeding 1000 nm, in particular exceeding 500 nm,
c) the initiation of the polymerisation of the mixture of monomers and/or pre-polymers and essentially exfoliated layered silicates obtained pursuant to step b') and
d) the subsequent polymerisation of the polymerisable monomers and/or pre-polymers which are present in the mixture for a third period of time at a third temperature or in a third temperature range,
wherein at least the initiation of the polymerisation (step c) and the polymerisation (step d), at least initially and, in particular also the mixing of monomers and/or pre-polymers with layered silicate during the first period of time (step a) and/or the agitation of the mixture obtained during the second period of time (step b) and/or the filtration of the obtained mixture (step b') are carried out under an inert gas atmosphere, in particular also under the exclusion of water.

## Revendications

1. Procédé de fabrication de nanocomposites thermoplastiques, comprenant les étapes consistant à :
a) mélanger au moins un monomère et/ou prépolymère polymérisable à l'état au moins partiellement liquide ou liquide par fusion et/ou présent dans un fluide liquide avec au moins un silicate lamellaire au moins partiellement intercalé, au moins partiellement organophile, pour une première durée à une première température ou dans une première plage de températures,
b) agiter le mélange obtenu en a) pendant une deuxième durée à une deuxième température ou dans une deuxième plage de températures,
b') filtrer l'essentiel de la totalité du mélange obtenu dans l'étape b), contenant des monomères et/ou prépolymères polymérisables et des silicates lamellaires, grâce à au moins un filtre après l'écoulement de la deuxième durée et avant l'amorçage de la polymérisation, avec rétention des particules et/ou agglomérats supérieurs à 1000 nm,
c) amorcer la polymérisation du mélange obtenu dans l'étape b') au niveau des monomères et/ou prépolymères et des silicates lamellaires et
d) polymériser enfin les monomères et/ou prépolymères polymérisables présents dans le mélange pendant une troisième durée à une troisième température ou dans une troisième plage de températures.

2. Procédé selon la revendication 1, **caractérisé en ce que**
le mélange de l'étape a) a lieu avec agitation.

3. Procédé selon la revendication 1 ou 2, **caractérisé en ce que**
la totalité du mélange, contenant des monomères et/ou prépolymères polymérisables et des silicates lamellaires est filtrée par au moins un filtre après l'écoulement de la deuxième durée et avant l'amorçage de la polymérisation des monomères et/ou prépolymères.

4. Procédé selon l'une quelconque des revendications 1 à 3, **caractérisé en ce que**
le ou les filtres retient/retiennent les particules et/ou agglomérats qui sont supérieurs à 500 nm.

5. Procédé selon l'une quelconque des revendications précédentes,
**caractérisé en ce que**
un silicate lamellaire présent à l'état déjà au moins partiellement exfolié est utilisé dans l'étape a) et/ou le silicate lamellaire étant présent essentiellement sous une forme exfoliée au début de l'étape c).

6. Procédé selon l'une quelconque des revendications précédentes,
**caractérisé en ce que**
1 à 10 % en poids, en particulier de 2 à 5 % en poids, de silicate lamellaire, par rapport à la quantité totale de monomères et/ou prépolymères polymérisables, sont utilisés.

7. Procédé selon l'une quelconque des revendications précédentes,
**caractérisé en ce que**
le fluide liquide comprend un liquide inerte dans les conditions de polymérisation, dans lequel les monomères et/ou prépolymères sont présents à l'état dissous.

8. Procédé selon l'une quelconque des revendications précédentes,
**caractérisé en ce que**
le fluide liquide comprend un système aqueux.

9. Procédé selon l'une quelconque des revendications précédentes,
**caractérisé en ce que**
les monomères ou prépolymères polymérisables comprennent le styrène, les dérivés de styrène, les amides, les dérivés d'amide, les lactames, les dérivés de lactame, les acrylates, les dérivés d'acrylate, les méthacrylates, les dérivés de méthylacrylate, ainsi que leurs mélanges et prépolymères quelconques, les caoutchoucs non réticulés ou partiellement réticulés, les résines époxyde, les oligomères de polyester macrocycliques ou les mélanges obtenus à partir d'au moins deux monomères et/ou prépolymères capables d'une polymérisation par polyaddition, éventuellement présents en solution ou sous forme de solution, en particulier sous la forme d'au moins un polyol et d'au moins un isocyanate.

10. Procédé selon l'une quelconque des revendications 7 à 9, **caractérisé**
**en ce que**
la polymérisation comporte une polymérisation anionique ou une polymérisation par addition.

11. Procédé selon la revendication 10, **caractérisé en ce que**
dans la mesure où la polymérisation représente une polymérisation anodique, au moins une première partie du mélange obtenu après la deuxième durée (étape b) et éventuellement après la filtration (étape b') est/sont séparée(s) et/ou au moins un premier mélange obtenu après l'étape de procédé b) ou b') est/sont préparé(s) et mélangé(s) avec au moins un activateur, et au moins une deuxième partie du mélange obtenu après la deuxième durée et éventuellement la filtration est/sont séparée(s) et/ou au moins un deuxième mélange obtenu après l'étape de procédé b) ou b') est/sont préparé(s) et mélangé(s) avec au moins un catalyseur, ces première et deuxième parties préparées et/ou ces premier et deuxième mélanges préparés étant à nouveau rassemblés, en particulier mélangés de manière homogène, en particulier dans la zone d'entrée d'une extrudeuse de réaction.

12. Procédé selon la revendication 10 ou 11, **caractérisé en ce que**
au moins l'amorçage de la polymérisation et la polymérisation au moins au début, et en particulier aussi le mélange des monomères et/ou prépolymères avec du silicate lamellaire pendant la première durée et/ou l'agitation du mélange obtenu pendant la deuxième durée, sont mis en oeuvre sous atmosphère de gaz inerte, en particulier aussi en exclusion d'eau.

13. Procédé selon l'une quelconque des revendications précédentes,
**caractérisé en ce que**
l'agitation, pendant les première et/ou seconde durées, comporte un cisaillement, une agitation, un secouage, un vibrage et/ou l'utilisation d'ultrasons.

14. Procédé selon la revendication 13, **caractérisé en ce que**
des dissolveurs, des rouleaux de cisaillement, en particulier des mécanismes de dispersion à rotor-stator et/ou broyeurs à billes rapides sont utilisés.

15. Procédé selon la revendication 13 ou 14, **caractérisé en ce que**
l'agitation, en particulier le cisaillement, est réglée de manière à ce qu'un cisaillement sous-microscopique soit obtenu au moins pour des parties.

16. Procédé selon l'une quelconque des revendications précédentes,
**caractérisé en ce que**
les première et/ou deuxième durées, les première et/ou deuxième températures et/ou la force de l'agitation, en particulier du cisaillement, sont choisies pendant les première et/ou deuxième durées de manière à ce que la majorité des silicates lamellaires soit présents à l'état défolié et/ou dispersé dans le monomère et/ou le prépolymère.

17. Procédé selon l'une quelconque des revendications précédentes,
**caractérisé en ce que**
la deuxième durée est au total d'au moins six heures, de manière préférée d'au moins douze heures et de manière particulièrement préférée d'au moins 18 heures.

18. Procédé selon l'une quelconque des revendications précédentes,
**caractérisé en ce que**
les première, deuxième et/ou troisième températures ou les première, deuxième et/ou troisième plages de températures se situent en dessous, en particulier plus de 20°C en dessous, de la température de ramollissement et/ou de fusion du matériau composite polymère ou en dessous de la somme calculée en ajoutant 100°C à la température de ramollissement du matériau composite polymère.

19. Procédé selon l'une quelconque des revendications précédentes,
**caractérisé en ce que**
le solvant inerte comprend les hydrocarbures, en particulier le pentane, l'hexane, l'heptane, leurs formes isomériques, ainsi que le benzène et/ou le toluène.

20. Procédé selon l'une quelconque des revendications précédentes,
**caractérisé en ce que**
d'autres charges, en particulier des charges ignifuges, des fibres courtes et/ou longues et/ou des oxydes minéraux et/ou des sels, et/ou des polymères sont mélangés avec les monomères et/ou prépolymères, en particulier dans les étapes de procédé a) et/ou b).

21. Procédé selon l'une quelconque des revendications précédentes,
**caractérisé en ce que**
l'étendue de la défoliation ou de l'exfoliation et/ou de la dispersion des silicates lamellaires est contrôlée en continu ou par échantillonnage aléatoire pendant la deuxième durée.

22. Procédé selon la revendication 1 de fabrication de nanocomposites thermoplastiques, **caractérisé par** les étapes consistant à :
a) mélanger au moins un monomère et/ou prépolymère polymérisable à l'état au moins partiellement liquide ou liquide par fusion et/ou présent dans un fluide liquide avec au moins un silicate lamellaire au moins partiellement intercalé, partiellement organophile, en particulier avec agitation, pendant une première durée à une première température ou dans une première plage de températures,
b) agiter le mélange obtenu en a) pendant une deuxième durée à une deuxième température ou dans une deuxième plage de températures, l'agitation comprenant, pendant les première et/deuxième durées, un cisaillement, une agitation, un secouage, un vibrage et/ou l'utilisation d'ultrasons et étant réglé de manière à ce qu'un cisaillement sous-microscopique soit obtenu au moins pour des parties, de préférence de manière essentiellement complète, avec obtention de silicates lamellaires exfoliés dispersés,
b') filtrer le mélange, contenant des monomères et/ou prépolymères polymérisables, éventuellement un fluide liquide, et des silicates lamellaires, en particulier essentiellement la totalité du mélange, après écoulement de la deuxième durée et/ou avant l'amorçage de la polymérisation des monomères et/ou prépolymère grâce a au moins un filtre retenant les particules et/ou agglomérats supérieur(e)s à 1000 nm, en particulier supérieur(e)s à 500 nm.
c) amorcer la polymérisation du mélange obtenu dans l'étape b') au niveau des monomères et/ou prépolymères et des silicates lamellaires essentiellement exfoliés et
d) polymériser enfin les monomères et/ou prépolymères polymérisables présents dans le mélange pendant une troisième durée à une troisième température ou dans une troisième plage de températures,
au moins l'amorçage de la polymérisation (étape c) et la polymérisation (étape d) au moins au début, et en particulier aussi le mélange des monomères et/ou prépolymères avec du silicate lamellaire pendant la première durée (étape a) et/ou l'agitation du mélange obtenu pendant la deuxième durée (étape b) et/ou la filtration du mélange obtenu (étape b'), étant mis en oeuvre sous atmosphère de gaz inerte, en particulier aussi en exclusion d'eau.
